# EUROPEAN PATENT SPECIFICATION

(11) **EP 1 947 033 B1**
(45) Date of publication and mention of the grant of the patent: **20.01.2010**
(21) Application number: 06725784.0
(22) Date of filing: 24.02.2006
(51) Int. Cl.: B65G 1/00, B65G 1/02, B65G 1/04, B65G 1/137

(54) **SUPPLY SYSTEM FOR THE INSERTION AND REMOVAL OF PALLETS IN A PALLET WAREHOUSE USING MOBILE SHELVES**
ZUFUHRSYSTEM ZUM EINSETZEN UND ENTFERNEN VON PALETTEN IN EINEM PALETTEN-LAGERHAUS UNTER VERWENDUNG BEWEGLICHER REGALE
SYSTEME D'ALIMENTATION POUR LES ENTREES ET LES SORTIES DANS UN ENTREPOT A PALETTES AU MOYEN DE LINEAIRES MOBILES

(30) Priority: 07.11.2005 ES 200502699
(43) Date of publication of application: 23.07.2008
(73) Proprietor: Larrayoz Iriarte, Jesús, 08860 Castelldefels Barcelona (ES)
(72) Inventor: Larrayoz Iriarte, Jesús, 08860 Castelldefels Barcelona (ES)
(74) Representative: Esteban Perez-Serrano, Maria Isabel
(86) International application number: PCT/ES2006/000086
(87) International publication number: WO 2007/051870

(56) References cited:
- WO-A1-99/10258
- DE-A1- 3 102 878
- DE-U1- 9 406 352
- GB-A- 1 512 396
- US-A- 5 141 118
- US-A- 5 174 707
- US-A- 5 333 983
- US-B2- 6 602 037

## Description

### OBJECT OF THE INVENTION

The present invention relates to a supply and removal system of pallets. In a pallet warehouse according to the preamble of claim 1.

This type of compact warehouse houses shelves with several height levels inside, the shelves corresponding to the two ends, front and rear, normally single and fixed to the ground while the rest of the shelves are double shelves and each one of them supported by their respective mobile base, led along rails embedded in the ground perpendicular to the directional axes of the shelves and bases. This mobility allows the joining of the shelves so that they occupy a reduced space and thus achieves a greater volume of storage; said shelves can also be separated to open passages with the purpose of supplying and removing the pallets with their load.

All of this provides a new system of insertion and removal of pallets in the current compact mobile warehouses.

Thus, the object of the invention is focused on compact warehouses on mobile bases which allow the obtainment of great surface optimisation, since it only works with one open passage while the others are closed. This invention automates and optimises the process of insertion and removal of pallets of this type of warehouses, decreasing the routes and the dead time and, consequently, increasing the number of insertions and/or removals of pallets of the warehouse per hour.

### BACKGROUND OF THE INVENTION

There are currently automatic pallet transport systems (roller paths, sliding belts, etc.), but which, unlike the system of the present invention, are not integrated in the same mobile-based compact warehouse. These pallet transport devices are located outside of the mobile warehouse, an additional manual transport being necessary to insert/remove said pallets from inside the warehouse.

On the other hand, there are completely automatic palletisation systems on the market, wherein a great use of the available warehouse surface is achieved, less than that of the mobile-based compact warehouses, since they work with narrower passages and with heights that far exceed those of the conventional warehouses which require forklift trucks to insert and remove the goods to and from their shelves. These completely automatic warehouses have a fixed shelf structure, while the means of inserting/removing the goods is an automatic machine, called transelevator, guided in its upper part by a profile placed on the shelves and in its lower part by a rail anchored to the ground. A transelevator is installed in each passage of the warehouse which is in charge of storing the desired goods on both sides of the passage.

The work cycle of this type of warehouse, for the case of the locations, consists of having the pallet with the desired goods at one of the end of the passage. The transelevator picks up the pallet and moves it through the passage until locating the programmed location for that pallet, where it places the goods on the shelf. Afterwards, the transelevator moves towards the end of the passage where the pallets are supplied to pick up the next one and perform the same operation. The work cycle for the removal has an identical route to that of the locations, except instead of picking up the pallet at the end of the passage, it deposits it for its definitive removal from the warehouse. This type of automatic warehouse performs combined cycles of locations and removals, thereby reducing the routes to be made without load because of the transelevator and so that it thus increases the number of insertions and removals of pallets to and from the warehouse per hour.

In conventional palletisation systems, forklift trucks are used, where the shelves are fixed to the ground and separated therebetween by passages where the forklift trucks circulate, driven by operators to be able to insert/remove the desired goods. The width of the passages varies depending on the type of lift used, and on the movement necessary, while the height of the shelves is limited to the maximum height that the forks of the forklift trucks existing on the market can reach.

In other cases, the shelves for palletisation are mounted on mobile bases guided by rails embedded in the ground which move laterally, with the purpose of opening the passage desired to gain access to the corresponding shelves. It allows the storage of the goods in a random way, since it has direct access to any location by opening the corresponding passage and its compact structure permits a greater optimisation of the warehouse's surface, unlike the automatic and conventional systems previously mentioned.

This palletisation system, as well as the conventional one, produces a high number of routes of the forklift trucks when the insertion and/or removal of a pallet to and/or from the warehouse is required. In this regard, its work cycle consists of opening the warehouse passage where the pallet to be collected is located, then the forklift truck moves through the inside of the passage until it finds it, picks it up and transfers it to the delivery point of the pallet. The same operation is used for an insertion. Obviously, it can be observed that the forklift truck makes one trip for each pallet and uses a specified time which varies depending on the length of the movement which has to be made from the collection point of the pallet until the delivery point thereof.

Also known is the compact palletisation system which allows the maximum use of the warehouse's surface. This is developed to store a single type of product. The passages between shelves do not exist and they are the shelves themselves which form the access passages of the forklift trucks. As has already been mentioned, this is a limited system since it only permits the storage of a single type of product because the forklift truck's access is performed at one or both ends of the shelves, not having access to the goods located in the central area of the shelves without previously having removed those from the ends.

Also known is the compact palletisation system with roller paths. This system, the same as the previous, also allows a great utilisation of the warehouse's surface. It consists of shelves which have corresponding roller paths at the base of each loading level. In this system, the goods are inserted at one end of the shelves and are removed at the other. The shelves have a slight unevenness, so that the pallets can be moved by their own weight towards the exit ends, the system being provided with means of braking the pallets so that the first one does not pass the exit end. Thus, when the first pallet is removed, the one directly behind it advances by its own weight due to the slope of the shelf, until it is stopped at the exit end. This type of palletisation does not permit storage of goods in a random way on any shelf, which means that we have pallets stored in each row which contain the same type of product. Document DE 9 406 352 U discloses a supply system according to the preamble of claim 1.

### DESCRIPTION OF THE INVENTION

With the purpose of reaching the goals and avoiding the drawbacks mentioned in previous section, the invention suggests a supply system for the insertion and removal of pallets in a pallet warehouse as stated in claim 1.

The warehouses of this type are normally made up by a combination of mobile and fixed shelves, the latter being those which are mounted at the two ends of the warehouse, normally in contact with the two walls which longitudinally delimit the space occupied.

The fixed shelves are single, since the access to their pallets is made from only one side of the shelf, the other being closed, as it is in contact with the wall.

The constructive system of these shelves is the same as that of the shelves used for conventional palletisation.

The double mobile shelves allow for the disposal therein of loaded pallets on two parallel, vertical levels, these being accessible, in principle, for their handling from both sides of the corresponding passage which separates two adjacent shelves, thus displacing one or several shelves supported by the mobile bases moving as a unit. These mobile bases are formed by a set of frames which support the rolling stock so that the shelves move and join thereto by means of rigid straps. The set of two joined frames by means of their straps forms what is called mobile base module, the mobile base having as many modules as pairs of adjoining frames.

In principle, each double shelf comprises a known structure formed by vertical pillars or frames, other longitudinal, horizontal sections and cross-sections, support feet, stiffening straps and other known elements, thus forming hollow spaces where the loaded pallets or corresponding products are located.

From this premise, the system of the invention includes two parallel transfer units therewithin, one of them designated for the insertion of the pallets within the warehouse and the other for the removal thereof, these two units being separated optionally by a central passage used as an inspection and maintenance gallery. These transfer units can consist of roller paths, sliding belts or any other medium which permits the transfer of the pallets from one point to any other inside the warehouse.

Said two transfer units comprise consecutive independent pallets supported by the mobile bases and the independent module supported by the first single, fixed shelf, in correspondence with the hollow spaces located at any shelf level.

In turn, each independent module is preferably made up of two pairs of transfer sub-units, each pair separated by the respective central passage span, if required.

One pallet which must be completely controllable in its movement is located in each transfer sub-unit, both for insertions as well as for removals.

The independent module situated on the single, fixed shelf before the entrance and exit ends is fixed and is made up of two transfer sub-units separated by the respective span of central passage, if required.

The single, fixed shelf after the last end of the warehouse does not include any module with transfer sub-units since, due to its location in the warehouse, its function is solely that of storing, without having to transport pallets.

The invention also includes double control and positioning systems: one for each direction of operation, systems which comprise amongst others, photocell sensors in the direction of insertion and removal and proximity detectors.

With this layout described, the collection and delivery point of the pallet is performed in the actual open passage of the warehouse, which noticeably reduces the route length of the forklift truck to do the work.

The two transfer units are preferably situated in the centre of the shelves perpendicular thereto, so that the forklift truck must pick up the desired pallets from the shelves and insert them in the removal transfer unit consecutively, at the same time as the insertion shelves are placed in the free spaces of the shelves in the open passage. Therefore, with the introduction of the transfer units, both those of insertion and removal, one or two forklift trucks (it will depend on the length of the passage) remove and insert pallets to and from the shelves situated in the same passage and without leaving it in the compact warehouse of mobile shelves, with a large reduction in the displacement length thereof, achieving the maximum optimisation of work time. We can consider that with the object of the invention, the number of operations per hour performed by the forklift trucks is more than doubled with regard to the system used currently.

In any warehouse that manages the insertion and removal at the same time, these latter take priority over the former, so that when one or another passage is opened, the removals will take precedent, i.e. when one or several pallets must be removed from the warehouse, the passage will open that will allow access thereto. The truck will transport them to the removal transfer unit and once this job has been performed, it will transfer the pallets to be inserted to the open positions in the shelves of that passage. However, one can also work with specific cases in the warehouses, solely with insertions or solely with removals. In the case of the insertions, a passage will be opened which permits the greatest number of placements of the pallets in the shelves of the open passage. If there are pallets to be stored remaining due to the fact that the shelves have been occupied, a second passage will be opened to place the rest of the pallets to be inserted in the shelves of this passage and thus one after the other until being able to place all of the pallets to be inserted in the warehouse. In the case of the removals, the passages which permit access to the pallets to be removed will open successively. For these last two cases, the two transfer units will move in a single direction, thereby increasing the supply of both the pallets to be inserted and the pallets to be removed.

This new automatic pallet transport system, as previously referred to, features a set of photocells which control the advancement of the pallets and their direction of movement when they are positioned with respect to the open passage, avoiding at all times that said pallet could fall when the work passages open. Furthermore, the corresponding software what manages the warehouse will issue the opening orders of the passages according to the specific priorities of each case and will indicate the situation of the pallet that is to be collected to remove it from the warehouse and it will also indicate the open locations closest to the transfer units where the pallets to be inserted can be placed with the purpose of reducing the routes of the forklift trucks as much as possible. Meanwhile, another forklift truck situated in the supply gallery will bring in the pallets to be inserted and collect the pallets to be removed to transfer them to the delivery point.

In order to aid a better understanding of this specification and forming an integral part thereof, a set of illustrative and non-limitative drawings representing the object of the invention are included below.

### BRIEF DESCRIPTION OF THE DRAWINGS

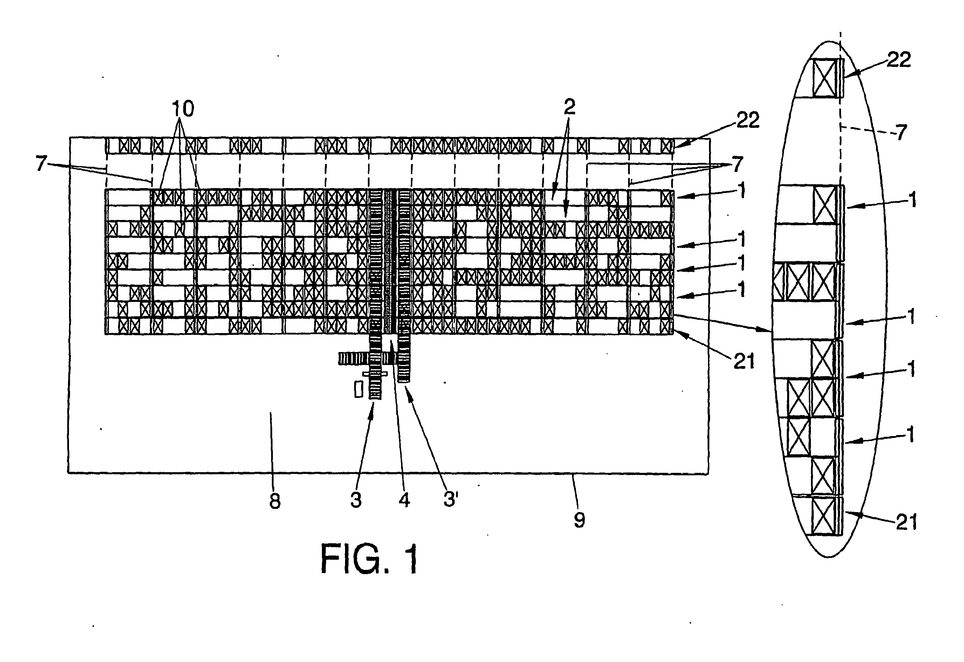

Figure 1.- Represents a plan view of a compact warehouse with mobile shelves which houses the supply system of pallets object of the invention in its interior. It essentially shows a set of fixed shelves and mobile shelves with compact palletisation inside a warehouse where a double transfer unit linked to the shelves that are part of the invention is included. The task thereof is to facilitate and speed up the supply and extraction of pallets loaded with products which shall be located in the empty spaces of those shelves.

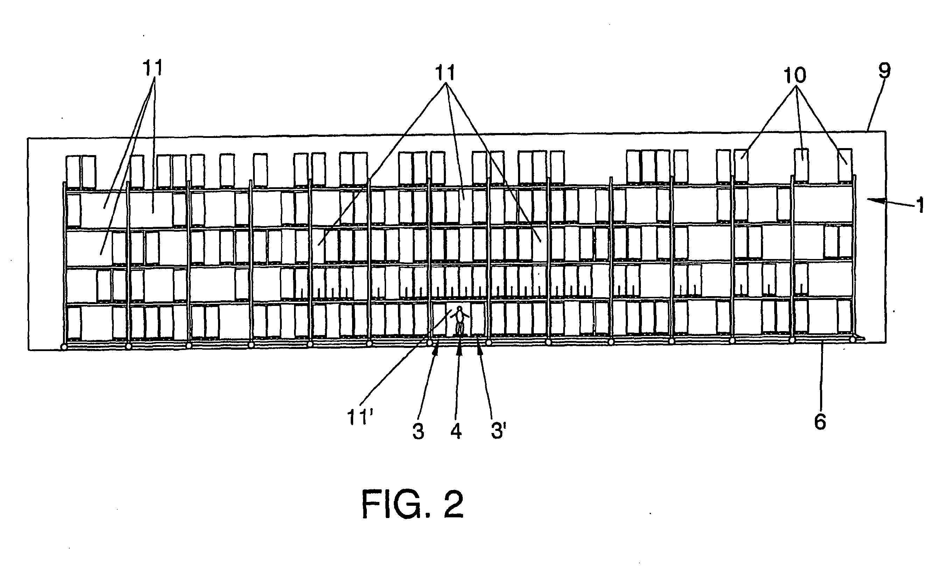

Figure 2.- Shows an elevational view of that represented in the previous figure.

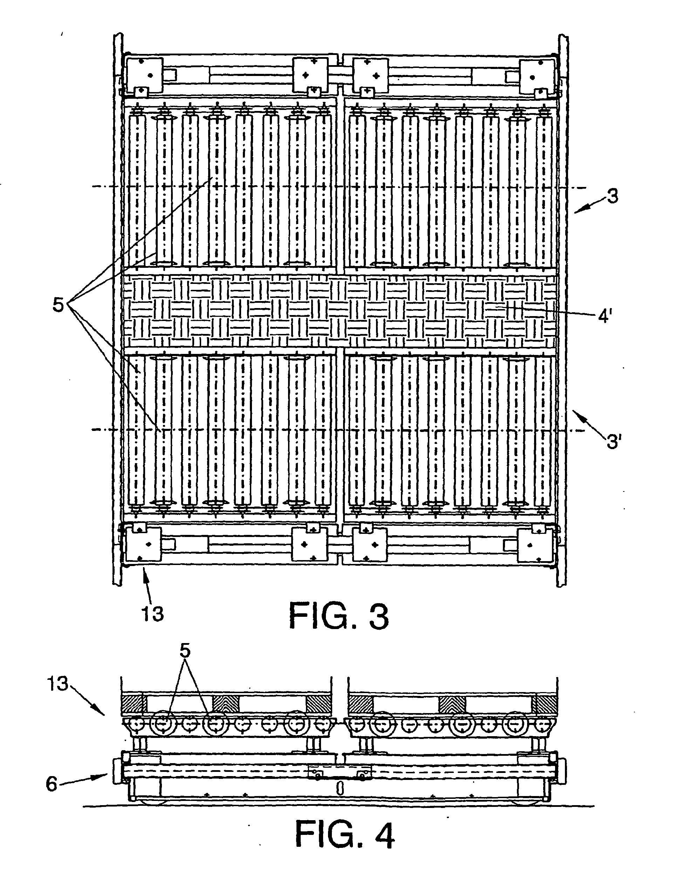

Figure 3.- Shows a plan view of a module for double shelves which comprises two pairs of transfer sub-units represented by roller paths, according to a preferred embodiment of the invention, separated by a span of central passage. The double transfer unit is comprised of a succession of those modules associated to each mobile shelf plus the modules associated to the fixed shelf at the end of the entrances and exits.
Figure 4.- Shows an elevational view of the module.
Figure 5.- Represents a schematic view of a module for double shelves where essentially photocells and control sensors are shown.
Figures 6 to 13.- Show elevational and plan schematic views, respectively, of distinct operations required by the system of the invention.

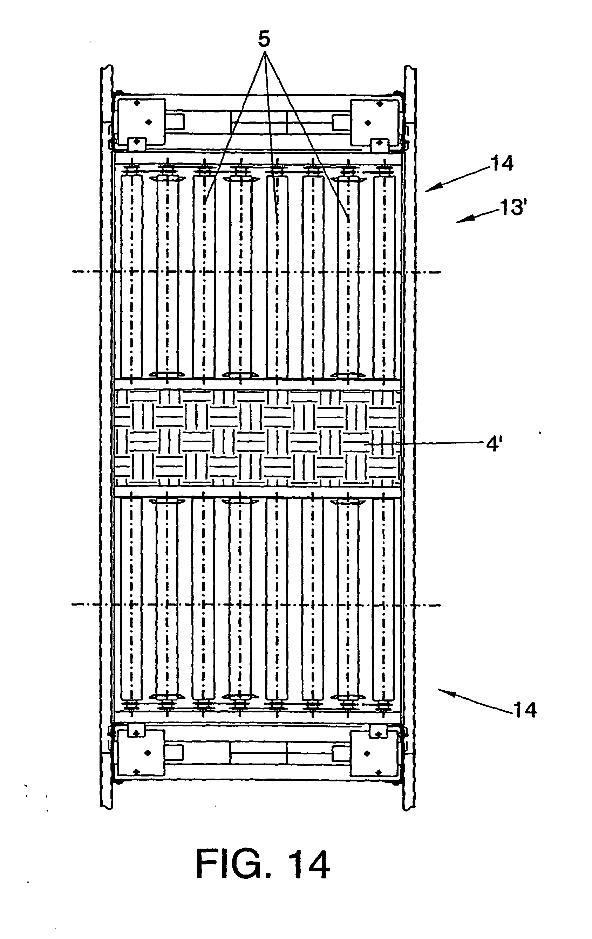

Figure 14.- Shows a plan view of a module for a single shelf.

### DETAILED EXPLANATION OF THE INVENTION

Considering the numeration adopted in the figures, the supply system for the insertion and removal in a compact pallet warehouse be means of fixed shelves 21, 22 and mobile shelves 1 formed by pairs of single shelves 2, is determined from the two units of roller paths 3, 3' separated by a central passage 4 used as an inspection and maintenance gallery, said gallery and the two units of roller paths 3, 3' being disposed in a central area perpendicular to compact palletisation shelves 1 and 21 which comprise single fixed shelves and double mobile shelves, the latter supported by mobile bases 6 guided by parallel rails 7 embedded in the ground 8 of a warehouse 9, said guide rails 7 disposed perpendicular to the longitudinal direction of the shelves 1. One unit of roller paths is designated for the insertion of pallets 10 loaded with a product, while the other is designated for the removals.

These shelves 1 comprise, in principle, a known resistant and solid structure which defines hollow spaces 11 at several levels or heights where the loaded pallets 10 are located. Said pallets are supported by completely reliable seatings which form part of said shelf structure.

To handle the pallets 10 with forklift trucks or any other device or vehicle, it will be necessary to first open the corresponding passage 12, separating adjacent shelves therebetween. This separation is done automatically by means of the respective motor elements.

The structure formed by the two roller path units 3, 3' and central passage 4 are disposed in correspondence with lower hollow spaces 11' facing the first level of the shelves 1, 21. Said structure comprises consecutive independent modules 13 supported by their corresponding mobile bases 6, so that when a passage 12 is opened between the double shelves 1, the adjacent modules 13 associated with said bases are also obviously opened.

The front single fixed shelf 21 situated at the end of the entrances and exits also features an independent module.

In principle, each independent module 13 comprises two pairs of sub-units 14 of rollers 5, each pair separated by the span 4' of passage making up the central passage 4. The independent module situated on the front fixed shelf 21, unlike the modules 13 situated on the mobile bases which contain a pair of sub-units 14 on each side, feature a single sub-unit 14 on each side as it is a single shelf. Thus, this single shelf 21 incorporates a smaller independent module 13' with a single pair of sub-units 14.

In turn, each sub-unit 14 comprises a group of rollers 5, where at least one of them is tractor, transferring its rotational movement to the other rollers of the sub-unit 14 thereof. The rotation can be in both directions as required. The transfer is carried out by means of pinions and chains.

During the dragging of the pallets 10 by the two units of insertion 3 and removal 3' paths, said pallets 10 are constantly controlled in correspondence with each sub-unit 14 with rollers 5.

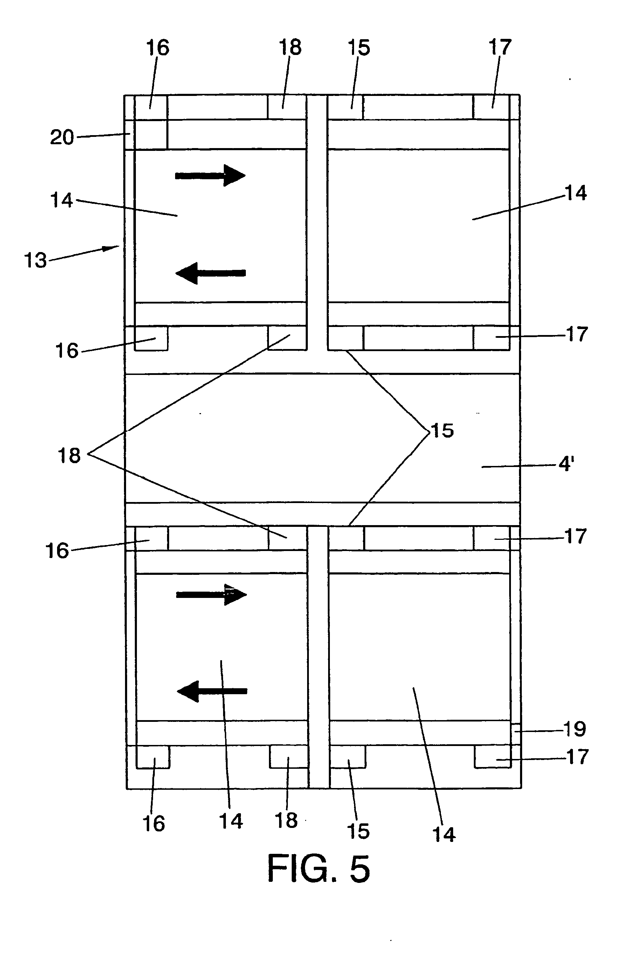

To do that, each sub-unit 14 includes two lateral, photocell sensors 15 and 16 in the direction of insertion of pallets 10 and two lateral, photocell sensors 17 and 18 in the direction of removal. In addition, each module 13 is equipped with proximity detectors 19 and 20, each one incorporated in a pair of roller path sub-units 14, as can be observed in figure 5. These proximity detectors 19 and 20 indicate if the mobile shelves, when static, are situated one next to the other or separated from each other, in which case this space should correspond to the open passage. The photocell sensors in both the direction of insertion and removal are disposed at the ends of the lateral sides of each sub-unit 14, while the proximity detectors between adjoining shelves are disposed at the ends of the front sides of the pair of sub-units 14.

Considering at least one open passage 12, the delivery and collection point will be in the aforementioned passage, one pallet 10 being deposited in a sub-unit 14 adjacent to the passage 12 and/or collecting a pallet from a sub-unit also adjacent to that same passage.

Considering the insertion of a pallet 10, once it is brought into the interior of the supply gallery made up of the different consecutive modules 13 and 13', which include the pairs of roller sub-units 14 and separation passage, the pallet advances until finding the only passage open in the plant. In this last module, as a consequence of the open passage, the photocell 16 is activated to actuate and stop the advancement of the corresponding pallet which is covering the entrance path. The pallet remains immobilised, waiting to be picked up by the forklift truck which will transfer it to its definitive location.

While this pallet waits to be picked up and is retained by the photocell 16, another photocell 15 is activated to stop the advancement of the next pallet to be inserted, avoiding the collision, and at the same time situating this pallet within the sub-unit.

This whole process is carried out inside the base whereto this sub-unit pertains, with the aim that, in all cases, the pallets to be inserted are always situated inside the base. If a pallet is situated between two mobile bases, it will fall as the bases move to open the corresponding work passage.

In the removal of the pallet, all that said in the case of the insertions is the same for the removal rollers, except that the control photocells, in this case they are those referenced with numbers 17 and 18, have the same operation and the same purposes. All of the pallets, if they are retained, must remain situated inside the base whereto the corresponding module pertains.

As the roller path units have the possibility of changing their direction, the photocells also have to be turned to be able to control the positioning of the pallets in both directions.

On the other hand, regarding the synchronisation of the system, the supply gallery consists of the module pertaining to the first single, fixed, front shelf and to the same number of other modules as mobile bases configure the compact warehouse. All of them have to work together, forming a single, continuous roller path unit, both for insertions and removals, so that the pallets can be taken from outside the warehouse to the open work passage and vice versa.

Each mobile base 6 also has proximity detectors 19 and 20 in the respective hollow space of the shelf containing the module, which are responsible for differentiating if one of the mobile base sides is in the open passage or not. In the event that, for example, the detector 19 detects the adjoining base, it will indicate that both bases are situated one next to the other (without passage between them) and as a consequence of this, the set of sub-units 14 will work as if it was dealing with a single unit. In the event that this detector does not detect the adjoining base, it will indicate that the passage is situated between both bases. This same example for the detector 19 will serve for the opposite side of the mobile base where the detector 29 will actuate.

In the case of the single, fixed, front shelf 21, the proximity detector will be situated on only one side, that adjacent to the mobile base, since its other side is either in contact with the wall or it does not have a mobile adjacent shelf to work with the first shelf of the warehouse. This proximity detector will be disposed at the end of the front side of one of the sub-units thereof, this being the sub-unit on the side opposite to the sub-unit which contains the proximity detector of the mobile base of the adjacent shelf, so that both detectors complement each other and cover the width of the modules, as occurs between adjacent mobile bases.

All of these control devices are governed by a panel situated on the ceiling of each lower hollow space 11' of the shelves 1 and 21, in correspondence with each roller module and central passage 4, so that the pallets 10 are situated on one side inside each mobile base 6 and on the other side, the movement of the bases 6 is impeded when all of the pallets 10 are not retained in their position.

The joining and continuation between the front, single, fixed shelf 21 module and the different roller path unit 3 and 3' modules 13, form traditional roller chains 5 which lead into an entry point and another exit point located outside of the space occupied by the compact palletised shelves.

Each module 13 comprises two pairs of roller path sub-units operating in opposite directions, in principle, one for the insertions and another for the removals.

It is necessary to synchronise the mobile shelf movements with the advancement of the pallets on the roller paths 3 and 3'.
1.- Request opening of a new passage depending on the removal required.
2.- Positioning and immobilisation of all of the pallets in the destined locations within the roller paths.
3.- Stoppage signal of all the pallets.
4.- Opening of new passage required.
5.- Signal of complete opening of new passage.
6.- Start-up of all the pallets within the roller paths.

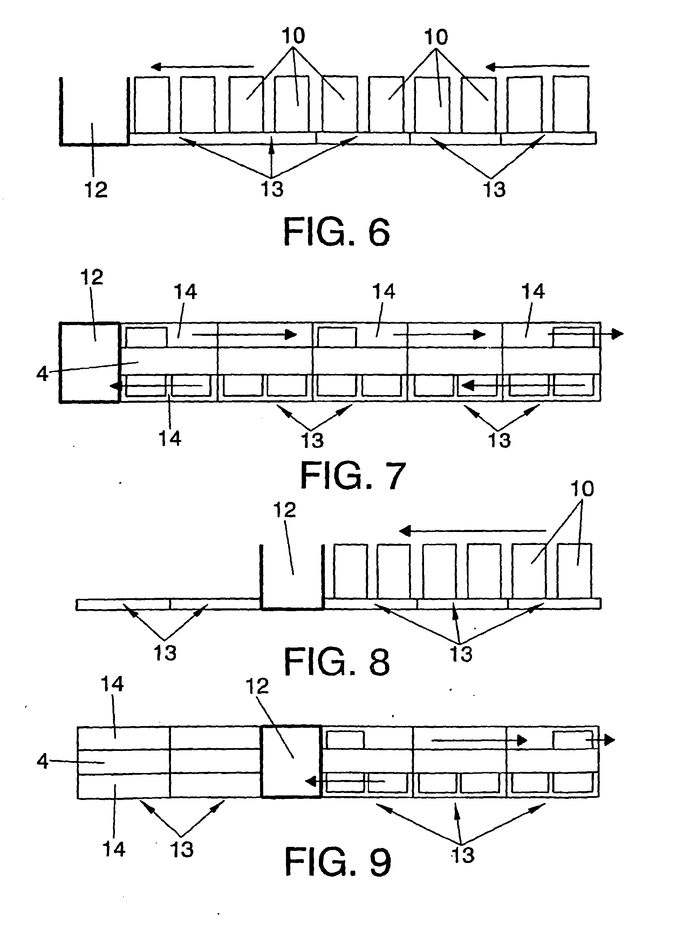

In operation, the accumulation of pallets in the roller path units 3 and 3' must be in such a manner that each roller path sub-unit 14 has, as a maximum, one perfectly placed pallet with the clearance required with the adjoining sub-unit 14 pallet, both in the unit to be removed and the one to be inserted, all of this giving place to two possible operations.
1.- Normal accumulation (figures 6 and 7).
   1.1.- When a pallet is removed from the entrance end, all of those that are in wait have to advance exactly the space that is left open and they have to do so in a progressive manner, keeping the required clearance.
   1.2.- There should not be any waiting times in the removal path, so once the pallet is placed on the guide track, this is timed to set in movement uninterruptedly, transferring the pallet to the exit point.
2.- Split accumulation.

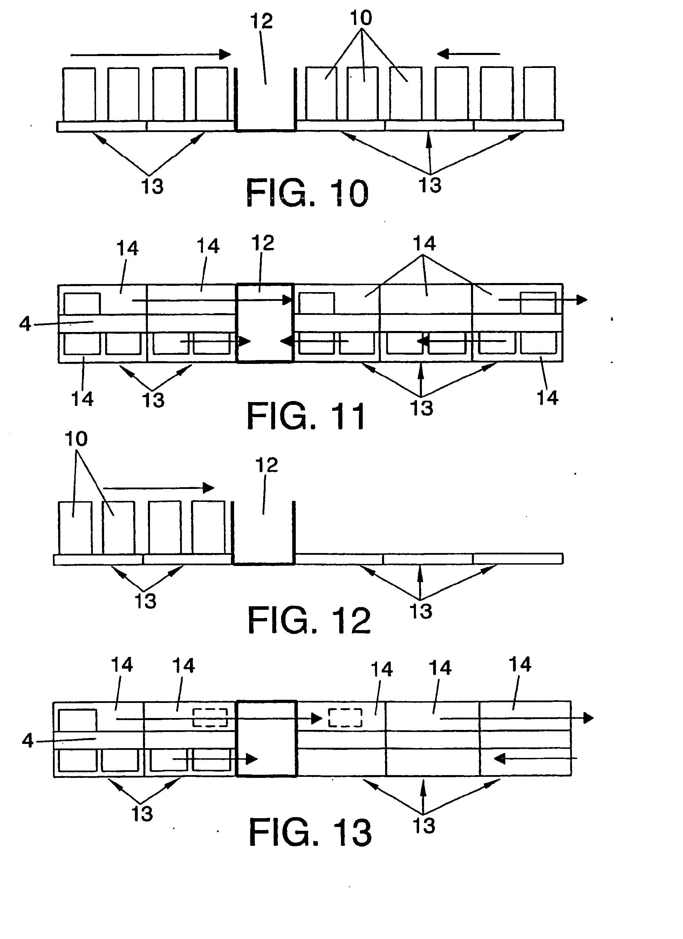

When one or several roller modules together with the respective bases and shelves move in one direction or another led by the guide rails embedded in the ground, leaving an empty space or an open passage between the different roller modules, the continuity of the chain which initially formed a set with different pallets in its starting position before the movement is broken, so that this movement can result in three cases.
a.- That all of the pallets located on top of the are situated to the right of the empty space or passage (figures 8 and 9). In this case, it operates as in the normal accumulation for the insertions and uninterrupted running for the removals.
b.- That all of the pallets remain located to the left of the empty space or passage (figures 12 and 13). In this case, the roller module units situated to the left have to change their direction of movement, only in the insertion part, as a response to the extraction of pallets. With respect to the removals, all of the pallets situated on the left have to be transferred to the right side, their subsequent operation being that of as in the case of the normal accumulation, both for the insertions and for the removals. The removals always will have preference over the insertions, which means that before starting to place pallets to be inserted, the pallets to be removed will have been transferred from the left side of the right side so that they continue their definitive movement.
c.- The pallets are located to the right and to the left of the open passage, this being the most frequent case (figures 10 and 11).

In this case, there must be a priority order beginning with the pallets on the left, first transferring all of the pallets to be removed to the right-hand side and then the pallets to be inserted to their new locations, all of this until finishing with all of the pallets situated on the left-hand side.

Once the entire left-hand side has been emptied, the emptying of the right-hand side will continue in the same manner as in the case of normal accumulation.

## Claims

1. Supply system for the insertion and removal of pallets (10) in a pallet warehouse (9) using mobile shelves (1), being applicable to a compact palletisation of double, mobile shelves (1) secured to mobile bases (6) coupled to rails (7) embedded in the ground (8), which are perpendicular to the longitudinal axes of the shelves (1, 21), whose structure defines a set of hollow spaces at various heights where pallets (10) loaded with a product are located, which are supported by seatings defined by said structure, being able to open passages (12) between adjacent shelves (1) moving said shelves (1) to handle the pallets with forklift trucks or other suitable vehicles and devices, also including at least one front, single fixed shelf (21), **characterised in that** in one preferably lower alignment of open hollow spaces (11') of the mobile shelves (1) and fixed shelves (21) are disposed two parallel pallet-dragging transfer units (3, 3'), the movements thereof can be in one or another direction according the requirements, also including means (15, 16, 17, 18, 19, 20) of automatic control of the position of the pallets (15, 16, 17, 18) and shelves (19, 20); all of this in order to collect and/or deliver the goods supported by the pallets in the same open passage without necessarily leaving it, the pallets being dragged by the transfer units (3, 3').

2. Supply system for the insertion and removal of pallets in a pallet warehouse using mobile shelves, according to the previous claim, **characterised in that** the transfer units are made up by a succession of independent modules (13) supported by their respective mobile bases (6) and each one of them comprising two pairs of transfer sub-units (14); the front fixed shelf (21) incorporating an independent module (13') which comprises a pair of transfer sub-units (14).

3. Supply system for the insertion and removal of pallets in a pallet warehouse using mobile shelves, according to claim 2, **characterised in that** the means of automatic control of the position of the pallets is located in each sub-unit (14) and comprise:
- photocell sensors in the direction of entrance (15 and 16);
- photocell sensors in the direction of exit (17 and 18);
all of this in order to have the pallets supported by the different transfer sub-units (14) correctly positioned.

4. Supply system for the insertion and removal of pallets in a pallet warehouse using mobile shelves, according to either of claims 2 or 3, **characterised in that** the means of automatic control of the position of the mobile shelves (1) are located in at least two of the transfer sub-units (14) and comprise at least one proximity detector (19 or 20);
all of this in order to have them controlled whether the passage is between adjacent shelves or not.

5. Supply system for the insertion and removal of pallets in a pallet warehouse using mobile shelves, according to any of the previous claims, **characterised in that** the transfer units (3, 3') and transfer sub-units (14) comprise roller paths (5).

6. Supply system for the insertion and removal of pallets in a pallet warehouse using mobile shelves, according to claim 5, **characterised in that** the roller paths (5) contain at least one motorised roller.

7. Supply system for the insertion and removal of pallets in a pallet warehouse using mobile shelves, according to either of claims 5 or 6, **characterised in that** the rollers (5) rotate in one and the other direction, as required.

8. Supply system for the insertion and removal of pallets in a pallet warehouse using mobile shelves, according to claims 1 through 4, **characterised in that** the transfer units (3, 3') and transfer sub-units (14) consist of sliding belts.

9. Supply system for the insertion and removal of pallets in a pallet warehouse using mobile shelves, according to claim 8, **characterised in that** the sliding belt moves in one and the other direction, as required.

10. Supply system for the insertion and removal of pallets in a pallet warehouse using mobile shelves, according to claim 1, **characterised in that** the transfer units (3, 3') are separated by a central passage (4) used as an inspection and maintenance gallery.

## Patentansprüche

1. Fördersystem für die Einfügung und Entfernung von Paletten (10) in einem Palettenlager (9), welches bewegliche Regale (1) verwendet, wobei dieses auf eine kompakte Palettisierung von doppelten, beweglichen Regalen (1) angewendet wird, die an beweglichen Grundplatten (6) gesichert sind, welche mit in dem Boden (8) eingelassenen Schienen (7) gekoppelt sind, die senkrecht zu den Längsachsen der Regale (1, 21) verlaufen, dessen Struktur einen Satz von Hohlräumen auf unterschiedlichen Höhen definiert, in denen sich mit einem Produkt beladene Paletten (10) befinden, welche von seitens der besagten Struktur definierten Auflageflächen gestützt werden, die dazu in der Lage ist, Gänge (12) zwischen aneinandergrenzenden Regalen (1) zu öffnen, indem die besagten Regale (1) zur Handhabung der Paletten mit Gabelstaplern oder anderen geeigneten Fahrzeugen und Geräten bewegt werden, wobei dieses ebenfalls wenigstens ein vorderes, verankertes Regal (21) einschließt, **dadurch gekennzeichnet, dass** in einer bevorzugten unteren Ausrichtung von offenen Hohlräumen (11') der beweglichen Regale (1) und verankerten Regale (21) zwei parallele, die Paletten ziehende Transfereinheiten (3, 3') angeordnet sind, deren Bewegungen je nach den Anforderungen in die eine oder die andere Richtung erfolgen kann, wobei ebenfalls Mittel (15, 16, 17, 18, 19, 20) zur automatischen Steuerung der Position der Paletten (15, 16, 17, 18) und Regale (19, 20) eingeschlossen sind; all diens, um die von den Paletten getragenen Waren aus demselben offenen Gang zu entnehmen und/oder zu befördern, ohne dass diese den Gang notwendigerweise verlassen müssen, wobei die Paletten von den Transfereinheiten (3, 3') gezogen werden.

2. Fördersystem für die Einfügung und Entfernung von Paletten in einem Palettenlager, welches bewegliche Regale verwendet, nach dem vorherigen Anspruch, **dadurch gekennzeichnet, dass** die Transfereinheiten aus einer Reihenfolge von unabhängigen Modulen (13) bestehen, die von deren entsprechenden beweglichen Grundplatten (6) getragen werden, und wobei jedes der Module zwei Paar Transferuntereinheiten (14) umfasst; wobei das vordere verankerte Regal (21) ein unabhängiges Modul (13') einschließt, welches ein Paar Transferuntereinheiten (14) umfasst.

3. Fördersystem für die Einfügung und Entfernung von Paletten in einem Palettenlager, welches bewegliche Regale verwendet, nach Anspruch 2, **dadurch gekennzeichnet, dass** sich die Mittel zur automatischen Steuerung der Positionen der Paletten in jeder Untereinheit (14) befinden und Folgendes umfassen:
- Fotozellensensoren in Richtung des Eingangs (15 und 16);
- Fotozellensensoren in Richtung der Ausgangs (17 und 18);
all dies, damit die von den unterschiedlichen Transferuntereinheiten (14) getragenen Paletten korrekt positioniert werden.

4. Fördersystem für die Einfügung und Entfernung von Paletten in einem Palettenlager, welches bewegliche Regale verwendet, nach jedem der Ansprüche 2 oder 3, **dadurch gekennzeichnet, dass** sich die Mittel zur automatischen Steuerung der Position der beweglichen Regale (1) in wenigstens zwei der Transferuntereinheiten (14) befinden und wenigstens einen Näherungsdetektor (19 oder 20) umfassen;
all dies, damit diese kontrollieren, ob der Gang sich zwischen angrenzenden Regalen oder nicht befindet.

5. Fördersystem für die Einfügung und Entfernung von Paletten in einem Palettenlager, welches bewegliche Regale verwendet, nach jedem der vorherigen Ansprüche, **dadurch gekennzeichnet, dass** die Transfereinheiten (3, 3') und Transferuntereinheiten (14) Rollschienen (5) umfassen.

6. Fördersystem für die Einfügung und Entfernung von Paletten in einem Palettenlager, welches bewegliche Regale verwendet, nach Anspruch 5, **dadurch gekennzeichnet, dass** die Rollschienen (5) mindestens eine motorisierte Rolle enthalten.

7. Fördersystem für die Einfügung und Entfernung von Paletten in einem Palettenlager, welches bewegliche Regale verwendet, nach jedem der Ansprüche 5 oder 6, **dadurch gekennzeichnet, dass** sich die Rollen (5) je nach Anforderung in die eine oder die andere Richtung drehen.

8. Fördersystem für die Einfügung und Entfernung von Paletten in einem Palettenlager, welches bewegliche Regale verwendet, nach den Ansprüchen 1 bis 4, **dadurch gekennzeichnet, dass** die Transfereinheiten (3, 3') und Transferuntereinheiten (14) aus Gleitbändern bestehen.

9. Fördersystem für die Einfügung und Entfernung von Paletten in einem Palettenlager, welches bewegliche Regale verwendet, nach Anspruch 8, **dadurch gekennzeichnet, dass** sich die Gleitbänder je nach Anforderung in die eine oder die andere Richtung bewegen.

10. Fördersystem für die Einfügung und Entfernung von Paletten in einem Palettenlager, welches bewegliche Regale verwendet, nach Anspruch 1, **dadurch gekennzeichnet, dass** die Transfereinheiten (3, 3') durch einen zentralen Gang (4) getrennt sind, welcher als eine Inspektions- und Wartungsgallerie verwendet wird.

## Revendications

1. Système d'approvisionnement pour l'insertion et le retrait de palettes (10) dans un entrepôt à palettes (9), employant des rayons mobiles (1), étant utilisable pour une palettisation compacte de rayons mobiles, doubles (1) attachés à des bases mobiles (6) couplées à des rails (7) implantés dans le sol (8), qui sont perpendiculaires aux axes longitudinaux des rayons (1, 21), dont la structure définit un ensemble d'espaces creux à différentes hauteurs où des palettes (10) chargées d'un produit sont placées, qui sont portées par des appuis définis par ladite structure, étant en mesure d'ouvrir des passages (12) entre des rayons (1) adjacents déplaçant lesdits rayons (1) pour manipuler les palettes avec des élévateurs à fourche ou d'autres véhicules et dispositifs adaptés, comprenant également au moins un rayon (21) fixe unique, avant, **caractérisé en ce que** dans un alignement de préférence inférieur d'espaces creux ouverts (11') des rayons mobiles (1) et des rayons fixes (21) sont disposées deux unités de transfert parallèles (3, 3') entraîneuses de palettes, dont les mouvements peuvent être dans l'un ou l'autre sens en fonction des besoins, comprenant également des moyens (15, 16, 17, 18, 19, 20) de commande automatique de la position des palettes (15, 16, 17, 18) et des rayons (19, 20) ; tout cela afin de collecter et/ou de délivrer les produits portés par les palettes dans le même passage ouvert sans nécessairement le quitter, les palettes étant traînées par les unités de transfert (3, 3').

2. Système d'approvisionnement pour l'insertion et le retrait de palettes dans un entrepôt à palettes employant des rayons mobiles, selon la revendication précédente, **caractérisé en ce que** les unités de transferts sont constituées d'une succession de modules indépendants (13) soutenus par leur bases mobiles (6) respectives et chacun d'eux comprenant deux paires de sous-unités de transfert (14) ; le rayon fixe avant (21) comportant un module indépendant (13') qui comprend une paire de sous-unités de transfert (14).

3. Système d'approvisionnement pour l'insertion et le retrait de palettes dans un entrepôt à palettes employant des rayons mobiles, selon la revendication 2, **caractérisé en ce que** le moyen de commande automatique de la position des palettes est situé dans chaque sous-unité (14) et comprend :
- capteurs à cellule photo-électrique dans le sens de l'entrée (15 et 16) ;
- capteurs à cellule photo-électrique dans le sens de la sortie (17 et 18) ;
tout cela afin que les palettes portées par les différentes sous-unités de transfert (14) soient correctement positionnées.

4. Système d'approvisionnement pour l'insertion et le retrait de palettes dans un entrepôt à palettes employant des rayons mobiles, selon l'une ou l'autre des revendications 2 et 3, **caractérisé en ce que** les moyens de commande automatique de la position des rayons mobiles (1) sont situés dans au moins deux des sous-unités de transfert (14) et comprennent au moins un détecteur de proximité (19 ou 20) ;
tout cela afin qu'ils contrôlent s'il y a ou non un passage entre des rayons adjacents.

5. Système d'approvisionnement pour l'insertion et le retrait de palettes dans un entrepôt à palettes employant des rayons mobiles, selon n'importe laquelle des revendications précédentes, **caractérisé en ce que** les unités de transfert (3, 3') et les sous-unités de transfert (14) comprennent des chemins de rouleaux (5).

6. Système d'approvisionnement pour l'insertion et le retrait de palettes dans un entrepôt à palettes employant des rayons mobiles, selon la revendication 5, **caractérisé en ce que** les chemins de rouleaux (5) comportent au moins un rouleau motorisé.

7. Système d'approvisionnement pour l'insertion et le retrait de palettes dans un entrepôt à palettes employant des rayons mobiles, selon l'une ou l'autre des revendications 5 et 6, **caractérisé en ce que** les rouleaux (5) tournent dans l'un et l'autre sens, en fonction des besoins.

8. Système d'approvisionnement pour l'insertion et le retrait de palettes dans un entrepôt à palettes employant des rayons mobiles, selon les revendications 1 à 4, **caractérisé en ce que** les unités de transfert (3, 3') et les sous-unités de transfert (14) consistent en des courroies de glissement.

9. Système d'approvisionnement pour l'insertion et le retrait de palettes dans un entrepôt à palettes employant des rayons mobiles, selon la revendication 8, **caractérisé en ce que** les courroies de glissement bougent dans l'un et l'autre sens, en fonction des besoins.

10. Système d'approvisionnement pour l'insertion et le retrait de palettes dans un entrepôt à palettes employant des rayons mobiles, selon la revendication 1, **caractérisé en ce que** les unités de transfert (3, 3') sont séparées par un passage central (4) utilisé comme une galerie d'inspection et de maintenance.
